# EUROPÄISCHE PATENTSCHRIFT

(11) **EP 1 927 914 B1**
(45) Veröffentlichungstag und Bekanntmachung des Hinweises auf die Patenterteilung: **13.10.2010**
(21) Anmeldenummer: 07021991.0
(22) Anmeldetag: 13.11.2007
(51) Int. Cl.: G05B 19/418

(54) **Sicherheitsmodul und Automatisierungssystem**
Safety module and automation system
Module de sécurité et système d'automatisation

(30) Priorität: 28.11.2006 DE 102006056420
(43) Veröffentlichungstag der Anmeldung: 04.06.2008
(73) Patentinhaber: Wago Verwaltungsgesellschaft mbH, 32423 Minden (DE)
(72) Erfinder: Lehzen, Michael, 32425 Minden (DE)
(74) Vertreter: Gerstein, Hans Joachim

(56) Entgegenhaltungen:
- DE-A1-102004 018 642

## Beschreibung

Die Erfindung betrifft ein Sicherheitsmodul mit Anschlüssen zur Verbindung mit einem zum Anschluss von Ein-/Ausgabemodulerl (4a, 4b) für Feldgeräten vorgesehenen Bussystem-Steuerungsmodul über einen Datenbus.

Die Erfindung betrifft weiterhin ein Automatisierungssystem mit einem Bussystem-Steuerungsmodul, einem Datenbus und an den Datenbus angeschlossenen Ein-/Ausgabemodulen mit Anschlussklemmen für den Anschluss von Feldbusgeräten zur Datenkommunikation mit der Bussystem-Steuerungseinheit.

Datenbussysteme mit Kopfmodulen zur Steuerung der Datenkommunikation auf einem internen Datenbus, an den Ein-/Ausgabemodule angeschlossen sind, sind hinreichend bekannt. Mit solchen Bussystemen ist es möglich, mit geringem Verkabelungsaufwand und hoher Flexibilität Steuerungs- und Überwachungssysteme einzurichten. Oftmals werden an solchen Automatisierungssysteme hohe Anforderungen an die Sicherstellung des zuverlässigen Betriebs gestellt, um durch Ausfall von Systemkomponenten oder durch eine fehlerhafte Datenübertragung verursachte Fehler sicher auszuschließen. Damit sollen die Gefährdung von Personen sowie Fehler in Fertigungsprozessen etc, vermieden werden.

Ein sicheres Steuerungssystem, das z. B. entsprechend der so genannten Kategorie 4 gemäß der europäischen Norm EN 954-1 sowie der Sicherheitsintegritätsstufe 3 (Safety Integrity Level SIL) gemäß IEC 61508 Teil 1 bis 7 zertifiziert ist, hat typischerweise Kopfmodule bzw. Bussystem-Steuerungsmodule mit mindestens zwei Mikrocontrollern, die redundant ein Sicherheitsprogramm sowie unter Umständen zusätzlich auch eine Standardapplikation abarbeiten. In Abhängigkeit von der Art der gewählten Redundanz (diversitär oder homogen) können die beiden Mikrocontroller voneinander verschieden sein, müssen es aber nicht zwingend. Die beiden Mikrocontroller tauschen zyklisch Daten über ein Bussystem-Steuerungsmodulinternes Interface aus, um die notwendige gegenseitige Überprüfung der Sicherheitsfunktionen durchführen zu können. Dieses Interface ist als Punkt-zu-Punkt-Verbindung zwischen den beiden Mikrocontrollern ausgebildet. Beide Mikrocontroller sind hierbei typisch auf ein oder mehreren Leiterplatten innerhalb eines Gehäuses ein und desselben Bussystem-Steuerungsmoduls untergebracht.

Eine solche Lösung mit einer Anschaltbaugruppe, die einen Busmaster und eine sichere Steuereinheit mit zwei voneinander unabhängig arbeitenden Mikroprozessoren hat, ist in der DE 103 53 950 A1 offenbart. Die beschriebene Anschaltbaugruppe kann zudem mit einer zweiten Steuereinheit kommunizieren, die eine nicht-sichere Steuerung zumindest einen nicht-sicherheitskritischen Prozesses bereitstellt. Im Notfall oder bei einer Fehlfunktion kann die sichere Steuereinheit mittels eines Bypass die Aufgaben der nicht-sicheren Steuereinheit oder die Steuerung der nicht-sicheren Prozesse übernehmen.

DE 199 28 517 offenbart ein Steuerungssystem zum Steuern von sicherheitskritischen Prozessen mit einem Feldbuskoppler an den ein Sicherheitsmodul angeschlossen ist. Die Sicherheitsfunktionen werden vollständig in dem Sicherheitsmodul abgearbeitet, das hierzu wiederum zwei sich gegenseitig überprüfende Mikrocontroller aufweist. Durch das Sicherheitsmodul ist die vollständige Sicherheitsfunktionalität ausgelagert, so dass das Feldbuskoppelmodul keinen sicherheitsrelevanten Aufbau und keine Sicherheitsfunktionen erfordert.

DE 198 15 147 A1 offenbart eine Anordnung von Sensoren zur Überwachung eines Arbeitsgerätes, wobei die Sensoren Slaves eines nach dem Master-Slave-Prinzip arbeitenden Bussystems bilden. Eine redundante Auswerteeinheit ist an das Bussystem angeschlossen, um den Datenverkehr auf dem Datenbus zu überwachen. Im Fall eines erkannten Fehlers werden Ausgänge der Auswerteeinheit abgeschaltet. Die Auswerteeinheit ist somit hinsichtlich der Fehlerüberprüfung autark und übernimmt gleichzeitig die Sicherheitsabschaltung.

Aus der DE 10 2004 018 642 A1 ist ein Sicherheitsmodul für Feldbus-basierte Prozesssteuerungssysteme bekannt.

Aufgabe der vorliegenden Erfindung ist es, ein verbessertes Sicherheitsmodul zu schaffen, das einen flexibleren Aufbau eines Automatisierungssystems ermöglicht, Die Aufgabe wird mit dem Sicherheitsmodul der eingangs genannten Art dadurch gelöst, dass das Sicherheitsmodul eine Datenverarbeitungseinheit hat, die entsprechend der Bussystem-Steuerungseinheit zur identischen Verarbeitung der über den Datenbus übertragenen Daten eingerichtet ist, und dass die Datenverarbeitungseinheit zur Sicherstellung einer ordnungsgemäßen Datenkommunikation mit einer Sicherheitsfunktion so eingerichtet ist, dass durch den Datenaustausch über den Datenbus mit der Bussystem-Steuerungseinheit eine gegenseitige Überprüfung der Sicherheitsfunktion erfolgt.

Im Unterschied zu den herkömmlichen Lösungen wird somit vorgeschlagen, dass eine zweite, redundante Datenverarbeitung mit Hilfe des Sicherheitsmoduls erfolgt, um in Verbindung mit der identischen Datenverarbeitung im zugeordneten Bussystem-Steuerungsmodul eine Sicherheitsüberprüfung vorzunehmen. Die erste Datenverarbeitung stellt parallel hierzu das an sich bekannte Bussystem-Steuerungsmodul bereit, das insbesondere ein Feldbuskoppler sein kann.

Die Überprüfung der Sicherheitsfunktion findet nunmehr nicht, wie bislang üblich, innerhalb ein und desselben Moduls statt, sondern zwischen Bussystem-Steuerungsmodul und Sicherheitsmodul. Das bislang interne Kommunikations-Interface zwischen den zwei redundanten Mikrocontrollern wird somit auf den Datenbus ausgelagert. Ferner wird der bislang in sicheren Bussystem-Steuerungsmodulen integrierte zweite Mikrocontroller in das Sicherheitsmodul ausgelagert.

Diese Verteilung der Sicherheitsfunktionalitäten auf das Bussystem-Steuerungsmodul und das neue, zusätzliche Sicherheitsmodul hat den Vorteil, dass durch Zustecken von Sicherheitsmodulen flexibel unterschiedliche Sicherheitsstufen aufgebaut werden können. Mit einem mit dem Bussystem-Steuerungsmodul über den Datenbus verbundenen Sicherheitsmodul wird eine redundante Datenverarbeitung bereitgestellt. Mit jedem weiteren hinzugefügten Sicherheitsmodul wird eine weitere Datenverarbeitungs- und Kontrollinstanz geschaffen, so dass ein mehrfach abgesichertes System variabel aufgebaut werden kann.

Das Sicherheitsmodul hat vorzugsweise eine Schnittstellensteuerungseinheit zur Steuerung der Datenkommunikation auf dem Datenbus, die zur Übermittlung der gegenseitigen Überprüfung der Sicherheitsfunktion vorgesehenen Daten im kontinuierlichen Datenstrom eingerichtet ist, wobei der kontinuierliche Datenstrom auch die zwischen Bussystem-Steuerungseinheit und am Datenbus ebenfalls angeschlossenen Ein-/Ausgabemodulen übertragenen Daten enthält. Der als Kommunikationsbus für die Ein-/Ausgabemodule und dem Feldbuskoppler genutzte Datenstrom wird somit auch für das Kommunikations-Intarface zwischen den mindestens zwei sich ergänzenden, die Sicherheitsfunktion ausführenden Datenverarbeitungseinheiten genutzt. Hierzu wird das Sicherheitsmodul ebenso wie die Ein-/Ausgabemodule an ein und denselben Datenbus angebunden.

Es ist aber auch denkbar, dass das Sicherheitsmodul eine Schnittstellensteuerung zur Steuerung der Datenkommunikation auf dem Datenbus hat und zur Übermittlung der zur gegenseitigen Überprüfung der Sicherheitsfunktion vorgesehenen Daten in einem separaten Datenstrom auf einem eigenen Datenbus für das Sicherheitsmodul eingerichtet ist. Das mindestens eine Sicherheitsmodul kann somit auf einem unterschiedlichen Kommunikationsbus als die Ein-/Ausgabemodule betrieben werden.

Das Sicherheitsmodul hat vorzugsweise Befestigungselemente, um in an sich bekannter Weise auf eine Tragschiene aufgesteckt zu werden. Bei dieser Ausführungsform sind vorzugsweise Druckkontakte an den Seitenflächen vorgesehen, die mit der Datenverarbeitungseinheit in Verbindung stehen und zur Verbindung mit korrespondierenden Druckkontakten angrenzender Module und zum Aufbau des Datenbusses beim Aufstecken des Sicherheitsmoduls auf die Tragschiene eingerichtet sind. Durch Aufstecken einer Reihe von aufeinanderfolgenden Modulen einschließlich des Sicherheitsmoduls wird somit auf einfache Weise ohne Verkabelungsaufwand ein Datenbus aufgebaut. Dieser Datenbus kann Nebenleitungen für die Datenübertragung auch Spannungsversorgungsleitungen haben. Der Datenbus ist vorzugsweise ein serieller Bus, der beispielsweise als Ringbus ausgeführt sein kann.

Bei dieser Ausführungsform ist es vorteilhaft, wenn der Datenbus vom Eingang eines Sicherheitsmoduls an einen Ausgang des Sicherheitsmoduls zum Anschluss an einen Eingang eines angrenzenden Moduls durch das Sicherheitsmodul durchgeschleift ist.

Aufgabe der Erfindung ist es weiterhin, einen verbessertes Automatisierungssystem der eingangs genannten Art zu schaffen.

Die Aufgabe wird mit dem mindestens einen Sicherheitsmodul gelöst, das mit dem Datenbus verbunden ist, sowie durch eine Bussystemsteuerungseinheit, die ebenfalls eine Datenverarbeitungseinheit zur Sicherstellung einer ordnungsgemäßen Datenkommunikation mit einer Sicherheitsfunktion hat. Die Datenverarbeitungseinheit ist so eingerichtet, dass durch Datenaustausch über den Datenbus mit dem Sicherheitsmodul eine gegenseitige Überprüfung der Sicherheitsfunktion erfolgt. Sicherheitsmodule und Bussystem-Steuerungseinheit sind somit hinsichtlich der sicherheitsrelevanten Funktionen aufeinander abgestimmt und ergänzen sich, um in der Gesamtheit ein mehrkanaliges, sich selbst überwachendes sicheres System zu schaffen.

Das Sicherheitsmodul und das Automatisierungssystem haben den Vorteil, dass eine Standard-Automatisierungsanlage nachträglich um sichere Komponenten erweitert werden kann. Hierzu muss lediglich mindestens ein Sicherheitsmodul zu dem bestehenden Datenbus hinzugesteckt werden. Mit Hilfe eines anschließenden Firmware-Updates des Feldbus-Controllers, d. h. der Bussystem-Steuerungseinheit, erfüllt das System dann die Anforderungen an definierte Sicherheitsstufen. Das gleiche Sicherheitsmodul kann für mehrere unterschiedliche Feldbuskoppler eingesetzt werden und muss nur einmal zertifiziert werden. Durch Hinzufügen weiterer Sicherheitsmodule können auch Automatisierungssysteme mit mehrfacher Redundanz und damit verbundener höherer Sicherheit realisiert werden.

Die Erfindung wird nachfolgend anhand von Ausführungsbeispielen mit den beigefügten Zeichnungen näher erläutert. Es zeigen:
- Fig. 1 -: Blockdiagramm eines Automatisierungssystems mit Sicherheitsmodul und Ein-/Ausgabemodulen an einem Datenbus eines Bussystem-Steuerungsmoduls;
- Fig. 2 -: Blockdiagramm eines Bussystem-Steuerungsmoduls mit zwei voneinander unabhängigen Datenbussen und Sicherheitsmodule auf einem und Ein-/Ausgabemodulen auf dem anderen Datenbus;
- Fig. 3 -: Blockdiagramm von zwei über ein Kommunikations-Interface miteinander verbundenen Datenverarbeitungseinheiten.

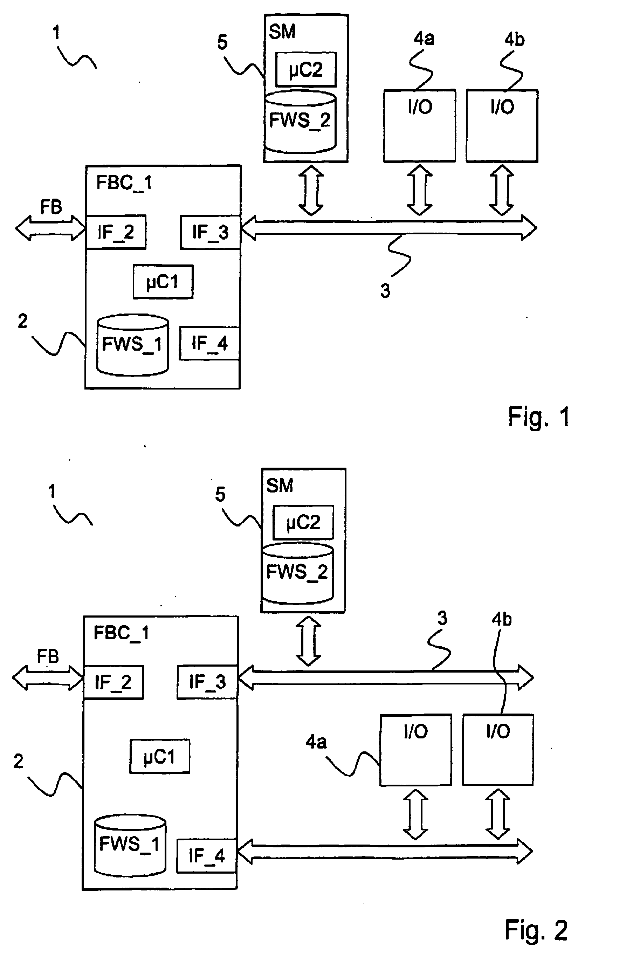

Figur 1 lässt ein Blockdiagramm eines Automatisierungssystems 1 erkennen, das ein Bussystem-Steuerungsmodul 2 mit einer Schnittstelle IF_2 zu einem Feldbus hat. Der Feldbus kann z. B. nach dem PROFlbus-, Ethernet- oder einem ähnlichem Standard arbeiten. Das Bussystem-Steuerungsmodul stellt einen Feldbus-Controller dar, der auf einer Tragschiene aufrastbar ist und ein Kopfmodul für einen internen Datenbus 3, wie z. B. den sogenannten S-Bus, bildet. Hierzu hat das Bussystem-Steuerungsmodul 2 eine weitere Schnittstelle lF_3 zur Steuerung und Durchführung des Datenaustauschs mit an dem Datenbus 3 angeschlossenen Ein-/Ausgabemodulen 4a, 4b. Die Anzahl der Ein-/Ausgabemodule 4a, 4b kann selbstverständlich beliebig groß sein und ist nur durch die Adressierbarkeit und die physikalische Länge des Datenbusses 3 eingeschränkt.

Das Bussystem-Steuerungsmodul 2 hat einen Mikrocontroller µC1, der über eine sichere Firmware FWS_1 betrieben wird.

Weiterhin ist an den Datenbus 3 ein Sicherheitsmodul 5 angeschlossen, der ebenfalls einen Mikrocontroller µC2 aufweist, der mit sicherheitsrelevanter Firmware FWS_2 betrieben wird. Das Sicherheitsmodul 5 stellt neben der Bussystem-Steuerungseinheit 2 eine identische Datenverarbeitung bereit, um die durch identische Datenverarbeitung und Vergleich der Ergebnisse der Datenverarbeitung von Sicherheitsmodul 5 und Bussystem-Steuerungsmodul 2 Datenverarbeitungsfehler erkennen zu können. Zur Absicherung der Datenkommunikation über den Datenbus 3 dahingehend, dass Datenverarbeitungsfehler erkannt und gegebenenfalls behoben werden können und eine Überführung des Automatisierungssystems 1 in einen sicheren Zustand möglich ist, sind die Datenverarbeitungseinheiten µC1 und µC2 des Bussystem-Steuerungsmoduls 2 und des Sicherheitsmoduls 5 so aufeinander abgestimmt, dass sie durch Datenaustausch über den Datenbus 3 eine gegenseitige Überprüfung der jeweiligen Sicherheitsfunktion des Bussystem-Steuerungsmoduls 2 und des Sicherheitsmoduls 5 durchführen. Die Datenverarbeitungseinheiten µC1 und µC2 sind damit nicht redundant entweder im Bussystem-Steuerungsmodul 2 oder im Sicherheitsmodul 5 aufgebaut, sondern verteilt angeordnet und ergänzen sich unter Nutzung des Datenbusses 3 als sicherheitsbezogenes Kommunikationsinterface für die Mikrocontroller µC1 und µC2.

Figur 2 lässt eine andere Ausführungsform des Automatisierungssystem 1 erkennen, bei der das Sicherheitsmodul 5 an einen eigenen Datenbus 3a angeschlossen ist, während die Ein-/Ausgabemodule 4a, 4b an einem zweiten gesonderten Datenbus 3b angeklemmt sind. Hierzu hat das Bussystem-Steuerungsmodul 2 eine weitere Schnittstelle IF_4 zur Ansteuerung des weiteren Datenbusses 3b. Das Sicherheitsmodul 5 wird beispielsweise auf einem so genannten S-Bus als internen Kommunikationsbus 3a und die Ein-/Ausgabemodule auf 4a, 4b auf einem internen Kommunikationsbus K-Bus betrieben.

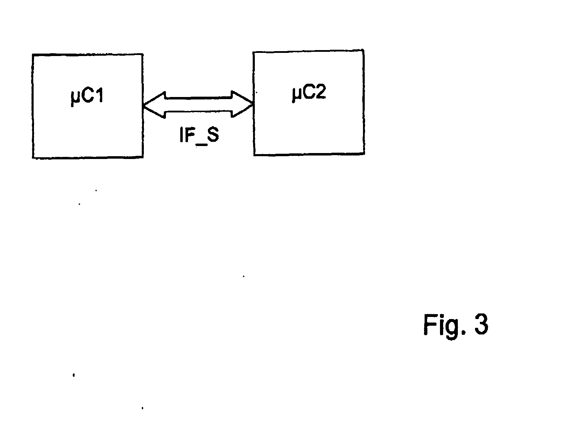

Figur 3 lässt ein Blockdiagramm der beiden verteilt angeordneten und über den Datenbus 3 voneinander getrennten Datenverarbeitungseinheiten µC1 und µC2 des Bussystem-Steuerungsmoduls 2 und Sicherheitsmoduls 5 erkennen. Es wird deutlich, dass die gegenseitige Überprüfung der Sicherheitsfunktion über die sicherheitsbezogene Schnittstelle IF_S erfolgt, die bei der herkömmlichen Integration der beiden Mikrocontroller µC1 und µC2 ein einziges Modul als interne Schnittstelle und bei der vorliegenden Erfindung unter Nutzung des Datenbusses 3 realisiert wird.

## Patentansprüche

1. Sicherheitsmodul (5) mit Anschlüssen zur Verbindung mit einem zum Anschluss von Ein-/Ausgabemodulen (4a, 4b) für Feldgeräten vorgesehenen Bussystem-Steuerungsmodul (2) über einen Datenbus (3), **dadurch gekennzeichnet, dass** das Sicherheitsmodul (5) eine Datenverarbeitungseinheit (µC2) hat, die entsprechend der Bussystem-Steuerungseinheit (2) zur identischen Verarbeitung der über den Datenbus (3) übertragenen Daten eingerichtet ist, und dass die Datenverarbeitungseinheit (µC2) zur Sicherstellung einer ordnungsgemäßen Datenkommunikation mit einer Sicherheitsfunktion so eingerichtet ist, dass durch Datenaustausch über den Datenbus (3) mit der Bussystem-Steuerungseinheit (2) eine gegenseitige Überprüfung der Sicherheitsfunktion erfolgt.

2. Sicherheitsmodul (5) nach Anspruch 1, **dadurch gekennzeichnet, dass** das Sicherheitsmodul (5) eine Schnittstellensteuerungseinheit zur Steuerung der Datenkommunikation auf dem Datenbus (3) hat und dass die Schnittstellensteuerungseinheit zur Übermittlung der zur gegenseitigen Überprüfung der Sicherheitsfunktion vorgesehenen Daten im kontinuierlichen Datenstrom, der zwischen Bussystem-Steuerungseinheit (2) und am Datenbus (3) ebenfalls angeschlossenen Ein/Ausgabemodulen (4a, 4b) übertragenen Daten enthält, eingerichtet ist.

3. Sicherheitsmodul (5) nach Anspruch 1, **dadurch gekennzeichnet, dass** das Sicherheitsmodul (5) eine Schnittstellensteuerungseinheit zur Steuerung der Datenkommunikation auf dem Datenbus (3) hat, die zur Übermittlung der zur gegenseitigen Überprüfung der Sicherheitsfunktion vorgesehenen Daten in einem separaten Datenstrom auf einem eigenen Datenbus (3a) für das Sicherheitsmodul (5) eingerichtet ist.

4. Sicherheitsmodul (5) nach einem der vorhergehenden Ansprüche, **dadurch gekennzeichnet, dass** das Sicherheitsmodul (5) Befestigungselemente zum Aufstecken des Sicherheitsmoduls (5) auf eine Tragschiene hat.

5. Sicherheitsmodul (5) nach Anspruch 4, **dadurch gekennzeichnet, dass** das Sicherheitsmodul (5) Druckkontakte an den Seitenflächen hat, die mit der Datenverarbeitungseinheit (µC2) in Verbindung stehen und zur Verbindung mit korrespondierenden Druckkontakten angrenzender Module (2, 4) und zum Aufbau des Datenbus (3) bei Aufstecken des Sicherheitsmoduls (5) auf die Tragschiene eingerichtet sind.

6. Sicherheitsmodul (5) nach einem der vorhergehenden Ansprüche, **dadurch gekennzeichnet, dass** der Datenbus (3) neben Leitungen für die Datenübertragung Spannungsversorgungsleitungen hat.

7. Sicherheitsmodul (5) nach einem der vorhergehenden Ansprüche, **dadurch gekennzeichnet, dass** der Datenbus (3) ein serieller Datenbus ist.

8. Sicherheitsmodul (5) nach Anspruch 7, **dadurch gekennzeichnet, dass** der Datenbus (3) vom Eingang des Sicherheitsmoduls (5) an einen Ausgang des Sicherheitsmoduls (5) zum Anschluss an einen Eingang eines angrenzenden Moduls (2, 4) durch das Sicherheitsmodul (5) durchgeschleift ist.

9. Automatisierungssystem (1) mit einem Bussystem-Steuerungsmodul (2), einem Datenbus (3) und an den Datenbus (3) angeschossene Ein-/Ausgabemodulen (4a, 4b) mit Anschlussklemmen für den Anschluss von Feldbusgeräten zur Datenkommunikation mit der Bussystem-Steuerungseinheit (2), **dadurch gekennzeichnet, dass** mindestens ein Sicherheitsmodul (5) nach einem der vorhergehenden Ansprüche mit dem Datenbus (3) verbunden ist und die Bussystem-Steuerungseinheit (2) ebenfalls eine Datenverarbeitungseinheit (µC1) hat, die zur Sicherstellung einer ordnungsgemäßen Datenkommunikation mit einer Sicherheitsfunktion so eingerichtet ist, dass durch Datenaustausch über den Datenbus (3) mit dem mindestens einen Sicherheitsmodul eine gegenseitige Überprüfung der Sicherheitsfunktionen erfolgt.

## Claims

1. Safety module (5) with terminals for connection to a bus system control module (2), which is provided for connecting input/output modules (4a, 4b) for field devices, via a databus (3), **characterized in that** the safety module (5) has a data processing unit (µC2), which is set up corresponding to the bus system control unit (2) for identical processing of the data transmitted via the databus (3), and **in that** the data processing unit (µC2) is set up for ensuring correct data communication with a safety function in such a way that mutual checking of the safety function takes place by means of data exchange via the databus (3) with the bus system control unit (2).

2. Safety module (5) according to Claim 1, **characterized in that** the safety module (5) has an interface control unit for controlling the data communication on the databus (3), and **in that** the interface control unit is set up for transferring the data provided for the mutual checking of the safety function in the continuous datastream, which contains data transmitted between the bus system control unit (2) and input/output modules (4a, 4b) which are likewise connected to the databus (3).

3. Safety module (5) according to Claim 1, **characterized in that** the safety module (5) has an interface control unit for controlling the data communication on the databus (3), which interface control unit is set up for transferring the data provided for the mutual checking of the safety function in a separate datastream on a dedicated databus (3a) for the safety module (5).

4. Safety module (5) according to one of the preceding claims, **characterized in that** the safety module (5) has fixing elements for plugging the safety module (5) onto a mounting rail.

5. Safety module (5) according to Claim 4, **characterized in that** the safety module (5) has pressure contacts on the side faces which are connected to the data processing unit (µC2) and are set up for connection to corresponding pressure contacts of adjacent modules (2, 4) and for setting up the databus (3) when the safety module (5) is plugged onto the mounting rail.

6. Safety module (5) according to one of the preceding claims, **characterized in that** the databus (3) has voltage supply lines in addition to lines for the data transmission.

7. Safety module (5) according to one of the preceding claims, **characterized in that** the databus (3) is a serial databus.

8. Safety module (5) according to Claim 7, **characterized in that** the databus (3) is looped through from the input of the safety module (5) to an output of the safety module (5) for connection to an input of an adjacent module (2, 4) through the safety module (5).

9. Automation system (1) with a bus system control module (2), a databus (3) and input/output modules (4a, 4b), which are connected to the databus (3), with connection terminals for connecting field bus devices for data communication with the bus system control unit (2), **characterized in that** at least one safety module (5) according to one of the preceding claims is connected to the databus (3) and the bus system control unit (2) likewise has a data processing unit (µC1),
which is set up for ensuring correct data communication with a safety function in such a way that mutual checking of the safety functions takes place by means of data exchange via the databus (3) with the at least one safety module.

## Revendications

1. Module de sécurité (5) avec des raccords pour le raccordement à un module de commande de système bus (2) pour raccorder des modules d'entrée/sortie (4a, 4b) prévus pour des appareils de champ via un bus de données (3), **caractérisé en ce que** le module de sécurité (5) a une unité de traitement de données (µC2) conçue pour traiter, en fonction de l'unité de commande du système bus (2), de façon identique les données transmises via le bus de données (3) et que l'unité de traitement de données (µC2) est conçue pour garantir une communication de données ordonnée avec une fonction de sécurité de telle sorte qu'un contrôle réciproque de la fonction de sécurité est réalisé avec l'unité de commande du système bus (2) par échange de données via le bus de données (3).

2. Module de sécurité (5) selon la revendication 1, **caractérisé en ce que** le module de sécurité (5) a une unité de commande d'interface pour le module de commande de la communication de données sur le bus de données (3) et que l'unité de commande d'interface est conçue pour transmettre les données prévues pour le contrôle réciproque de la fonction de sécurité dans le flot continu de données qui contient les données transmises entre l'unité de commande du système bus (2) et les modules de sortie (4a, 4b) également raccordés au bus de données (3).

3. Module de sécurité (5) selon la revendication 1, **caractérisé en ce que** le module de sécurité (5) a une unité de commande d'interface pour commander la communication de données sur le bus de données (3), ladite communication étant conçue pour transmettre les données prévues pour le contrôle réciproque de la fonction de sécurité dans un flot de données séparé sur un bus de données (3a) propre, pour le module de sécurité (5).

4. Module de sécurité (5) selon l'une quelconque des revendications précédentes, **caractérisé en ce que** le module de sécurité (5) a des éléments de fixation pour placer le module de sécurité (5) sur un rail porteur.

5. Module de sécurité (5) selon la revendication 4, **caractérisé en ce que** le module de sécurité (5) a des contacts par pression au niveau des surfaces latérales reliées à l'unité de traitement de données (µC2) prévus pour le raccordement aux contacts par pression correspondants du module (2, 4) connexe et pour la structuration du bus de données (3) lors de la pose du module de sécurité (5) sur le rail porteur.

6. Module de sécurité (5) selon l'une quelconque des revendications précédentes, **caractérisé en ce que** le bus de données (3) comprend, en plus des câbles prévus pour la transmission de données, des câbles d'alimentation en tension.

7. Module de sécurité (5) selon l'une quelconque des revendications précédentes, **caractérisé en ce que** le bus de données (3) est un bus de données sériel.

8. Module de sécurité (5) selon la revendication 7, **caractérisé en ce que** le bus de données (3) est balayé par le module de sécurité (5) de l'entrée du module de sécurité (5) à une sortie du module de
sécurité (5) pour le raccordement à une entrée d'un module (2, 4) connexe.

9. Système d'automatisation (1) avec un module de commande de système bus (2), un bus de données (3) et des modules d'entrée/sortie (4a, 4b) raccordés au bus de données (3) avec des bornes de raccordement pour le raccord d'appareils de bus de champ pour la communication de données avec l'unité de commande du système bus (2), **caractérisé en ce qu'**au moins un module de sécurité (5) selon l'une quelconque des revendications précédentes est relié au bus de données (3) et que l'unité de commande du système bus (2) comprend également une unité de traitement de données (µC1) conçue pour garantir une communication de données ordonnée avec une fonction de sécurité, de façon à permettre, par échange de données via le bus de données (3), un contrôle réciproque des fonctions de sécurité avec l'au moins un module de sécurité.
